# EUROPÄISCHE PATENTSCHRIFT

(11) **EP 0 808 426 B1**
(45) Veröffentlichungstag und Bekanntmachung des Hinweises auf die Patenterteilung: **14.04.1999**
(21) Anmeldenummer: 96901755.7
(22) Anmeldetag: 23.01.1996
(51) Int. Cl.: F16B 13/10

(54) **BEFESTIGUNGSEINRICHTUNG IN EINEM NICHT DURCHGEHENDEN HINTERSCHNITTENEN BOHRLOCH**
FASTENER FOR UNDERCUT BLIND HOLE
DISPOSITIF DE FIXATION DANS UN TROU BORGNE CONTRE-DEPOUILLE

(30) Priorität: 06.02.1995 DE 29501801 U
(43) Veröffentlichungstag der Anmeldung: 26.11.1997
(73) Patentinhaber: Eischeid, Karl, 51766 Engelskirchen (DE)
(72) Erfinder: Eischeid, Karl, 51766 Engelskirchen (DE)
(74) Vertreter: Eichler, Peter, Dipl.-Ing.
(86) Internationale Anmeldenummer: EP9600260
(87) Internationale Veröffentlichungsnummer: WO9624776

(56) Entgegenhaltungen:
- CH-A- 492 892
- CH-A- 645 168
- DE-A- 3 311 264
- GB-A- 2 077 385

## Beschreibung

Die Erfindung bezieht sich auf eine Befestigungseinrichtung in einem nicht durchgehenden hinterschnittenen Bohrloch, insbesondere für dünne Platten, mit einem bohrungssohlenseitig längsgeschlitzten Dübel, der an seinem inneren Ende mit der Form der Hinterschneidung des Bohrlochs entsprechenden Spreizlappen versehen ist und eine koaxiale Bohrung hat, und mit einem in die Bohrung eingebrachten Einschlagbolzen, der die Spreizlappen praktisch über deren gesamte Länge abstützt, und dessen eines Ende mit dem äußeren Dübelende axial etwa gleichliegend angeordnet ist (GB-A-2 077 385).

Aus der EP 0 336 183 ist eine Befestigungseinrichtung in einem nicht durchgehenden hinterschnittenen Bohrloch bekannt, mit einem bohrungssohlenseitig längs geschlitzten Dübel, der an seinem inneren Ende mit der Form der Hinterschneidung des Bohrlochs entsprechenden Spreizlappen versehen ist und eine koaxiale Bohrung hat, die mit einem Innengewinde versehen ist. In das Innengewinde ist ein Gewindebauteil hineingeschraubt. Dieses spreizt die zum Einstecken in das Bohrloch zusammengedrückten Spreizlappen des Dübels, soweit die Elastizität des Werkstoffs des Dübels nicht für eine selbsttätige Spreizung der Spreizlappen bei eingestecktem Dübel sorgt. Beim Einschrauben des Gewindebauteils tritt dieses während des Spreizens in eine Kraftwechselwirkung mit dem Dübel. Die Vorderkante des Gewindebauteils drückt auf nicht gespreizte Bereiche des Dübels. Infolgedessen kann es dazu kommen, daß der bereits erfolgte Gewindeeingriff zwischen dem Gewindebauteil und dem Dübel beeinträchtigt wird und die Spreizung der Spreizlappen nicht oder nur unvollständig erfolgt. Das ist insbesondere der Fall, wenn der Dübel nicht genügend tief hineingesteckt wurde, oder wenn sich irgendwelche Herstellungstoleranzen des Bohrlochs auswirken, dieses also radial und/oder axial nicht tief genug ist. In solchen Fällen ist nicht auszuschließen, daß das bekannte Gewindebauteil nicht tief genug eingeschraubt wird. Ein solcher Mangel muß nicht ohne weiteres auffallen, weil das Gewindebauteil bestimmungsgemäß aus dem Bohrloch vorsteht, um an ihm einen Montagegegenstand zu befestigen, beispielsweise eine Halteplatte, die mittels einer Gewindemutter mit dem Bohrlochträger zusammengespannt wird. Dabei kann es zu einer nicht genügend festen und infolgedessen nicht ausreichend tragenden Verbindung zwischen dem Bohrlochträger und dem Montagegegenstand kommen. Ferner kann es auch zu einer Beschädigung des Bohrlochträgers kommen, wenn nämlich das Gewindebauteil mit übergroßer Gewalt in den Dübel hineingeschraubt wird und dieser den Bohrlochträger sprengt, weil letzterer entsprechend empfindlich ist. Solche Empfindlichkeiten sind insbesondere gegeben, wenn der Bohrlochträger eine dünne Platte ist, für die die Befestigungseinrichtung vor allem bestimmt ist. Der Bohrlochträger kann also eine Schichtpreßstoff- oder Faserplatte sein, die durch unsachgemäßen Gebrauch der bekannten Befestigungseinrichtung zu Bruch gehen kann.

Um zu erreichen, daß die Befestigungsvorrichtung insbesondere bei dünnen Platten als Bohrlochträger eine zuverlässige und leichte überwachbare Befestigungsmöglichkeit bietet, die einfacher zu montieren ist, wird der Bolzen als ein auf seiner Mantelfläche gewindefreier Einschlagbolzen ausgebildet, dessen äußeres Ende mit dem äußeren Dübelende axial etwa gleichliegend angeordnet ist. Das ergibt sich aus DE-GM 93 06 937, dessen Befestigungseinrichtung die eingangs genannten Merkmale aufweist.

Gegenüber dem oben beschriebenen Einschrauben eines Gewindebauteils hat das Einschlagen des Bolzens den Vorteil, daß es sehr viel schneller und müheloser erfolgen kann. Beim Einschlagen spreizt der Einschlagbolzen die Spreizlappen des Dübels, sofern diese wegen der Form ihrer der Hinterschneidung des Bohrlochs angepaßten Spreizlappen zum Einstecken des Dübels in das Bohrloch zusammengedrückt sind und nicht infolge einer Elastizität des Dübelwerkstoffs auseinanderfedern können. Ein axialer Formschluß zwischen dem Bolzen und dem Dübel findet infolge der glatten Mantelfläche des Einschlagbolzens nicht statt. Andererseits ist aber der Kraftschluß zwischen der Mantelfläche des Bolzens und der Innenwand des Bohrlochs so groß, daß der Bolzen nicht demontierbar ist. Die Demontage des Bolzens kann erforderlich sein, wenn das mit der Befestigungseinrichtung am Bohrlochträger festgelegte Teil wieder entfernt werden soll, beispielsweise eine dünne Platte, weil diese als fehlerhaft beanstandet wurde oder weil sie bei weiteren bauseitigen Maßnahmen insbesondere außerhalb des Befestigungsbereichs beschädigt wurde.

Der Erfindung liegt daher die Aufgabe zugrunde, eine Befestigungseinrichtung mit den eingangs genannten Merkmalen so zu verbessern, daß sie leicht montierbar ist, aber bedarfsweise auch wieder demontiert werden kann.

Diese Aufgabe wird dadurch gelöst, daß der Einschlagbolzen mit einem Außengewinde versehen ist und an einem seiner Enden eine Verdrehungseingriffsausnehmung aufweist.

Für die Erfindung ist wesentlich, daß ein Einschlagbolzen mit Außengewinde eingesetzt wird. Auch ein derartiger Einschlagbolzen mit Außengewinde kann die Spreizlappen des Dübels spreizen, wenn diese zumindest im Bereich der bohrungssohlenseitigen Eingriffsvorsprünge einen Bohrungsdurchmesser bilden, der kleiner ist, als der Außendurchmesser des Einschlagbolzens. Eine solche Bohrungsdurchmesserverringerung liegt auch vor, wenn der Dübel nicht ordnungsgemäß sitzt, weil das Bohrloch zu tief ist. Es kommt dazu, daß das Außengewinde in die Wand der Bohrung des Dübels eingreift und sich dort festkrallt. Das dient der automatischen Sicherung des Einschlagbolzens innerhalb des Bohrlochs, ohne daß es dazu einer besonderen Ausbildung der Bohrung bedarf. Der Sitz des Einschlagbolzens im Dübel ist also auch durch Formschluß gewährleistet, obwohl der spreizende Bolzen eingeschlagen oder eingedrückt wurde.

Von weiterer erheblicher Bedeutung ist die Verdrehungseingriffsausnehmung in einem Ende des Einschlagbolzens. Der Einschlagbolzen kann also derart angeordnet werden, daß seine Verdrehungseingriffsausnehmung zugänglich ist, nachdem er eingeschlagen wurde. Wird ein Eingriffswerkzeug in diese Ausnehmung eingesetzt und im Lösesinne verdreht, so schraubt sich der Einschlagbolzen dank seines Außengewindes heraus. Die Befestigungseinrichtung ist infolgedessen problemlos demontierbar. Es ist ohne weiteres möglich, etwa bereits befestigte Bauteile wieder zu entfernen. Es ist aber auch möglich, eine Befestigungseinrichtung dann wieder zu demontieren, wenn das Einschlagen des Bolzens wider Erwarten nicht zu einem korrekten Sitz des Dübels geführt hat, weil beispielsweise die Hinterschneidung des Bohrlochs nicht formgerecht hergestellt wurde, oder weil der Dübel aus anderen Gründen nicht richtig sitzt.

Es ist wenig aufwendig, an Dübel angepaßte Einschlagbolzen mit Außengewinde herzustellen. Derartige Einschlagbolzen können von Stangenmaterial abgelängt werden, und Verdrehungseingriffsausnehmungen sind dann leicht herzustellen, beispielsweise durch Einschlagen, sofern es nicht normale DIN-Teile bzw. Schrauben sind. Die formenmäßige Ausgestaltung einer Verdrehungseingriffsausnehmung wird unter Berücksichtigung der aufzubringenden Verdrehungskräfte ausgewählt.

Wenn es auf einen guten Formschluß zwischen dem Dübel und dem Einschlagbolzen ankommt, kann so vorgegangen werden, daß der Einschlagbolzen zunächst weitgehend eingeschlagen wird, bis sein endgültiger Sitz fast erreicht wird, wonach die verbleibende Einbauweglänge durch Einschrauben erreicht wird, wozu die Verdrehungseingriffsausnehmung zu nutzen ist. Kritische Einbausituationen, insbesondere bei gegen Sprengwirkung empfindlichen Bohrlochträgern, lassen sich so am besten beherrschen. Die Befestigungseinrichtung ermöglicht damit kombinierten Schlag/Schraub-Einbau. Besondere Ausgestaltungen des Einschlagbolzens, wie bei selbstschneidenden Schrauben einerseits oder bei Schraubnägeln andererseits, sind nicht erforderlich.

Die Befestigungseinrichtung ist hinsichtlich ihres Einschlagbolzens am einfachsten ausgebildet und am universellsten einzusetzen, wenn der Einschlagbolzen eine einzige, von einem Bohrlochträger abgewendete Verdrehungseingriffsausnehmung hat. Ein solcher Einschlagbolzen ist bei seiner Anwendung bzw. beim Einschlagen zutreffend zu halten, insbesondere also mit der Verdrehungseingriffsausnehmung zum Einschlagenden, wenn gewährleistet werden soll, daß die Befestigungseinrichtung wieder gelöst werden kann. Das ist aber offensichtlich wenig problematisch.

Es gibt aber auch Anwendungsfälle, bei denen gewährleistet werden soll, daß die Befestigungseinrichtung nicht wieder gelöst werden kann. Das ist beispielsweise in öffentlichen Bereichen der Fall, die erfahrungsgemäß demoliert werden können. Auch Sicherheitsgründe können dafür sprechen, die Befestigungseinrichtung so auszubilden, daß sie nicht demontiert werden kann. In diesen Fällen ist es vorteilhaft, die Befestigungseinrichtung so auszugestalten, daß die Verdrehungseingriffsausnehmung bohrungssohlenseitig angeordnet ist. Die Verdrehungseingriffsausnehmung ist infolgedessen nicht zugänglich, so daß die Lösbarkeit infolgedessen ausgeschlossen ist.

Wenn bei der Anwendung der Befestigungseinrichtung gewährleistet sein soll, daß die Verdrehungseingriffsausnehmung in jedem Fall zugänglich ist, andererseits aber eine hohe Produktivität gewährleistet sein soll, kann die Befestigungseinrichtung auch so ausgebildet werden, der Einschlagbolzen an seinen beiden Enden mit je einer Verdrehungseingriffsausnehmung versehen ist. Es wird erreicht, daß der Anwender nicht auf die richtige Positionierung des Einschlagbolzens zu achten braucht. Unabhängig von der Anordnung des Einschlagbolzens beim Einschlagen in der einen oder in der anderen Achslage ist jeweils eine der Ausnehmungen dem Anwender zugekehrt und die Zugänglichkeit einer Verdrehungseingriffsausnehmung gewährleistet. Ein Anlernen des Anwenders insoweit entfällt.

Vorteilhafterweise wird die Befestigungseinrichtung so ausgebildet, daß der Außendurchmesser des Einschlagbolzens gleich oder kleiner ist, als der Durchmesser der Bohrung des Dübels. Infolgedessen kann der Einschlagbolzen problemlos mit seinem Einsteckende in die Bohrung des Dübels hineingesteckt werden, bis es nicht mehr weitergeht, weil der Einschlagbolzen auf die zusammengedrückten Spreizlappen stößt. Der Einbau des Einschlagbolzens wird insoweit erleichtert.

Abweichend von Vorstehendem kann der Außendurchmesser des Einschlagbolzens aber auch größer sein, als der Durchmesser der Bohrung des Dübels, wozu dann allerdings ein geeigneter Werkstoff des Einschlagbolzens gewählt werden muß, damit dieser problemlos in den Dübel eingesetzt werden kann. Insoweit ist es vorteilhaft, die Befestigungseinrichtung so auszubilden, daß der Einschlagbolzen einen vom Werkstoff des Dübels abweichenden weicheren oder härteren Werkstoff aufweist. Besteht der Einschlagbolzen aus einem weicheren Werkstoff, als der Dübel, z.B. aus Kunststoff, so läßt sich dadurch die Gefahr einer unerwünschten Einwirkung des Dübels auf den Bohrlochträger verringern, die Sprengwirkung des Dübels wird also herabgesetzt. Wird der Einschlagbolzen hingegen aus einem härteren Werkstoff gefertigt, als der Dübel, so wird der Formschlußeingriff des Einschlagbolzens in den Dübel vergrössert und damit der Zusammenhalt der Befestigungseinrichtung verbessert. Um in einem solchen Fall die Sprengwirkung der Befestigungseinrichtung bzw. des Dübels auf dem Bohrlochträger zu verringern, kann der Dübel beispielsweise aus einem Kunststoff hergestellt werden, in den sich das Gewinde des Einschlagbolzens einfrißt.

Um vergleichsweise große Verdrehkräfte auf den eingebauten Einschlagbolzen übertragen zu können, ist die Verdrehungseingriffsausnehmung ein Innenmehrkant. Eine derartige unrunde zylindrische Ausnehmung bietet vergleichsweise große Anlageflächen zum Übertragen entsprechender Drehmomente auf den Einschlagbolzen, wenn dieser herausgedreht oder weiter hineingeschraubt werden soll.

Eine Sonderbauform der Befestigungseinrichtung liegt vor, wenn der Einschlagbolzen eine geschlitzte Gewindehülse ist. Die Eigensteifigkeit der Hülse zum Einschlagen kann durch geeignete dicke Wandstärken erreicht werden. Die Rückstellkräfte der Hülse können ausreichend bemessen werden, um den formschlüssigen Sitz im Dübel und die erforderliche Spreizwirkung auf die Spreizlappen zu gewährleisten. Die Herstellbarkeit ist durch einfaches Außengewindeherstellen und/oder Bohren und/oder Schlitzen massenfertigungsgerecht. Ein Demontieren ist mit einem Werkzeug leicht möglich, dessen Querschnitt dem durch den Schlitz und die Bohrung bestimmten schlüsselartigen Querschnitt angepaßt ist.

Es ist bekannt, die Befestigungseinrichtung so auszubilden, daß ihr Dübel an seinem äußeren Dübelende einen radial vorspringenden Ringkragen hat. Dieser liegt an der Außenwand des Bohrlochträgers oder an einer Fläche des am Bohrlochträger zu befestigenden Gegenstandes an und gewährleistet so die zutreffende Positionierung des Dübels bzw. der Spreizlappen im Bohrloch bis zum vollständigen Einbau des Einschlagbolzens. Die Einbausituation kann aber aus vielerlei Gründen so sein, daß der Dübel trotz vollständigen Einsteckens in das Bohrloch nicht richtig sitzt. Hieran können Toleranzen der beteiligten Elemente Schuld sein, beispielsweise aber auch Oberflächenrauhigkeiten des Bohrlochträgers, wobei z.B. an Verschmutzungen zu denken ist. Um derartige Einbauprobleme beherrschen zu können, ist die Befestigungseinrichtung so ausgebildet, daß der Dübel an seinem äußeren Dübelende einen radial vorspringenden Ringkragen hat, der zur axialen Lageanpassung des Dübels an seiner wandseitigen Ringfläche radial innen dünner ist, als radial außen. Die axiale Lageanpassung des Dübels wird dadurch erreicht, daß der Ringkragen beim Einbau des Einschlagbolzens nachgeben bzw. federn kann. Das wird durch die dem Dübelkern nahe Werkstoffreduzierung erreicht. Darüber hinaus ist das Nachfedern bezüglich der Beanspruchung aller am Zusammenbau der Befestigungseinrichtung beteiligten Bauteile von Vorteil.

Die Erfindung wird anhand von in der Zeichnung dargestellten Ausführungsbeispielen erläutert. Es zeigt:
- Fig.1: einen Querschnitt durch einen Dübel für eine erfindungsgemäße Befestigungseinrichtung,
- Fig.2: eine Ausgestaltung eines Einschlagbolzens, der mit einem Dübel gemäß Fig.1 zusammengebaut werden kann,
- Fig.3: einen Querschnitt durch eine Halterung eines Bohrlochträgers mit einem in Einbaustellung befindlichen Dübel, jedoch ohne Einschlagbolzen, und
- Fig.4,5: jeweils einen Querschnitt durch eine komplett montierte Befestigungseinrichtung.

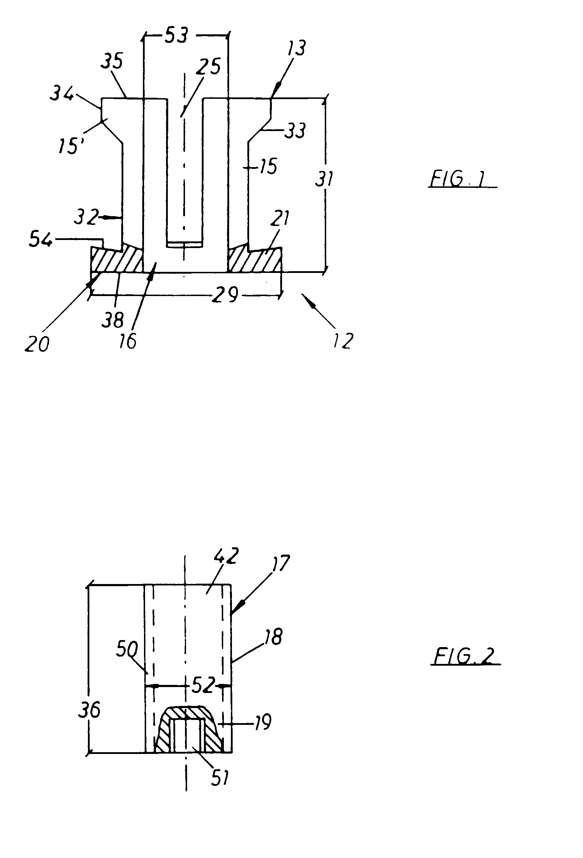

Der in Fig.1 dargestellte Dübel 12 besteht im wesentlichen aus einem hohlzylinderartigen Schaft 32 mit einer glatt durchgehenden Bohrung 16. Am äußeren Dübelende 20 ist ein Ringkragen 21 vorgesehen, der rund um den Außenumfang in gleichem Maße radial vorspringt. Das andere, innere Ende 13 des Dübels 12 hat vier Längsschlitze 25, die zu den jeweils benachbarten Längsschlitzen den gleichen Abstand aufweisen. Die Längsschlitze 25 sind also über den Umfang gleichmäßig verteilt. Sie ragen achsparallel bis in die Nähe des Ringkragens 21, jedoch ohne in diesen einzudringen. Hierdurch entstehen vier Spreizlappen 15, die im Bereich des Endes 13 des Dübels 12 mit radialen Vorsprüngen 15' versehen sind. Diese Vorsprünge 15' bilden die Form eines durch die Längsschlitze 25 unterteilten Ringkragens, der konische Übergangsflächen 33 zwischen dem größten Außendurchmesser 34 der Vorsprünge 15' und dem Durchmesser des Schafts 32 in seinem zylinderartigen Bereich aufweisen. Das innere Dübelende 13 hat eine Innenendfläche 35, die der Außenendfläche 38 des äußeren Dübelendes 20 parallel ist.

Der Ringkragen 21 hat eine den Vorsprüngen 15' zugewendete Ringfläche 54, die der Außenendfläche 38 des äußeren Dübelendes 20 nicht parallel ist. Vielmehr ist der Ringkragen 21 in seinen bohrungsnahen Bereichen axial dünner, als in seinen bohrungsfernen Bereichen. Die Ringfläche 54 ist plan ausgebildet.

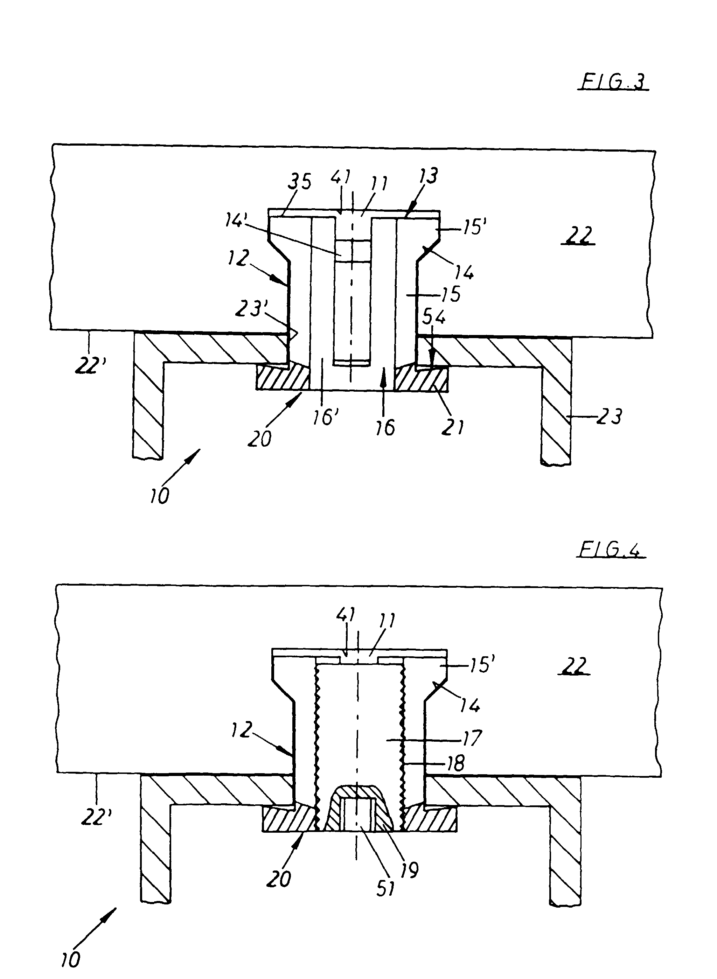

Der in Fig.2 dargestellte Einschlagbolzen 17 ist im wesentlichen zylindrisch und seine Mantelfläche 18 ist mit einem Gewinde 50 versehen, das über die gesamte Bolzenlänge 36 durchläuft. Der Einschlagbolzen 17 hat zumindest im wesentlichen kreiszylindrischen Querschnitt mit einem Durchmesser 52, der dem Durchmesser 53 der Bohrung 16 des Dübels 12 etwa entspricht. Die Länge 36 des Bolzens 17 ist etwas geringer, als die Dübellänge 31, und zwar bis etwa 0,5mm.

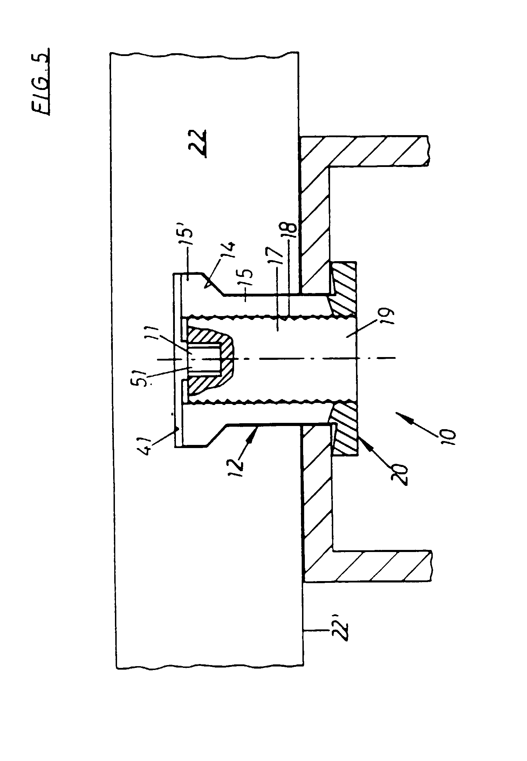

In Fig.3 ist eine Befestigungseinrichtung 10 dargestellt, die in ein hinterschnittenes Bohrloch 11 eines Bohrlochträgers 22 eingebaut ist. Dieser Bohrlochträger ist z.B. eine Schichtpreßstoff- oder Keramikplatte. Das in ihr befindliche Bohrloch 11 ist mit einer Hinterschneidung 14 versehen, also mit einer innenliegenden Radiuserweiterung. Ein solches hinterschnittenes Bohrloch 11 kann beispielsweise mit einer in der DE 38 11 249 A1 beschriebenen Vorrichtung hergestellt werden. Bei der Herstellung ergibt sich eine ebene bzw. fast ebene Bohrlochsohle 41, um die Restwanddicke des Bohrlochträgers 22 möglichst groß zu halten. Dementsprechend ist das Bohrloch 11 im übrigen so bemessen, daß der in es einzusetzende Dübel 12 mit seinem inneren Ende 13 der Bohrlochsohle 41 dicht benachbart ist.

Der Einschlagbolzen 17 ist in Fig.3 nicht dargestellt. Gleichwohl befindet sich der Dübel 12 in seiner Einbaulage, in der die Vorsprünge 15' der Spreizlappen 15 in die Hinterschneidung 14 des Bohrlochs 11 eingreifen. In dieser Einbaulage wird die Halterung 23 vom Ringkragen 21 an der Innenfläche 22' des Bohrlochträgers 22 gehalten. Die Halterung 23 ist als allgemeines.Bauteil zu verstehen, mit der der Bohrlochträger 22 gehalten werden soll. Hierzu wird die Halterung 23 mit einer nicht dargestellten Unterkonstruktion z.B. an einer Gebäudeaußenwand verbunden. Eine Ausnehmung 23' dieser Halterung 23, beispielsweise eine Bohrung, muß so groß sein, daß das innere Dübelende 13 mit seinen Spreizlappen 15 hindurchgesteckt werden kann. Hierzu genügt ein Bohrungsdurchmesser, der dem des Bohrlochs 11 entspricht. Denn beim Einbau des Dübels 12 in das Bohrloch 11 müssen die Spreizlappen 15 soweit zusammengedrückt werden, daß sie sowohl durch das Bohrloch 23' der Halterung 23 als auch durch den halterungsseitigen Bereich des Bohrlochs 11 bis in den Bereich der Hinterschneidung 14 geschoben werden können. Dann liegt der Ringkragen 21 in dargestellter Weise dicht an der Halterung 23. Die Halterung 23 kann im übrigen beliebig ausgebildet werden. Eine weitere spezielle Anpassung an den Dübel 12 ist nicht erforderlich.

Die Fig.4 und 5 zeigen unterschiedliche Einbaustellungen des Einschlagbolzens 17, wobei jedoch das äußere Ende 19 des Einschlagbolzens 17 jeweils mit dem äußeren Dübelende 20 fluchtet. Des weiteren ist das Außengewinde 18 des Einschlagbolzens 17 so dargestellt, daß erkennbar ist, wie sich die Gewindespitzen in die gemäß Fig.3 an sich glatte Innenwand 16' der Bohrung 16 eingraben können und dadurch einen Formschluß bewirken, der zum besseren Zusammenhalt der Befestigungseinrichtung beiträgt bzw. das Herausfallen des Bolzens verhindert. Voraussetzung für diesen Formschluß gemäß den Fig.4,5 ist es, daß der Außendurchmesser 52 des Einschlagbolzens 17 geringfügig größer ist, als der Durchmesser 53 der Bohrung. Es ist jedoch auch möglich, den Außendurchmesser 52 etwas kleiner zu wählen, als den Innendurchmesser 53 des Dübels 12, wenn dessen Spreizlappen 15 in nicht dargestellter Weise zusammengedrückt sind, so daß der Außendurchmesser 34 der Vorsprünge 15' etwas kleiner ist, als der Durchmesser des Bohrlochs des Bohrlochträgers 22. In diesem Fall bewirkt das Einschlagen des Einschlagbolzens 17 das Spreizen der Spreizlappen 15 bzw. der Vorsprünge 15' in die in den Fig.4,5 dargestellte Stellung, wobei ein formschlüssiger Eingriff praktisch über die gesamte Länge der Spreizlappen 15 erreicht werden kann, mit Ausnahme derjenigen Wandbereiche des Bohrlochs 16, die dem Ringkragen 21 benachbart sind.

Beim Spreizen der Spreizlappen 15 gelangen die in Fig.1 dargestellten konusförmigen Übergangsflächen 33 des Dübels zur Anlage an den entsprechend konusförmigen Flächen 14' der Hinterschneidung 14. Beim weiteren Einschlagen des Bolzens 17 gleiten diese Flächen solange aufeinander und ziehen dabei den Dübel 12 nach innen bzw. mit seinem Ringkragen 21 in Richtung auf die Innenfläche 22' des Bohrlochträgers 22, bis der Ringkragen 21 zur Anlage an der Halterung kommt. Eine axiale Lageanpassung des Dübels 12 wird dadurch erreicht, daß der Ringkragen 21 infolge der vorbeschriebenen Ausbildung etwas nachgibt bzw. federt. Dadurch kann ein Toleranzausgleich erzielt werden und es wird auch ein axialer fester Sitz erreicht, ohne daß es unbedingt notwendig ist, axial federnde Zwischenlagen anzuwenden.

Durch das Einschlagen des Bolzens 17 gelangt der Dübel 12 in die für ihn vorgesehene Einbaulage. Es ist danach keine weitere Maßnahme notwendig, um die Halterung 23 und den Bohrlochträger 22 miteinander zu verbinden. Die elastische Verspannung beider durch den Ringkragen 21 sichert nicht nur die vorbestimmte Zusammenbaulage, sondern gewährleistet auch eine gegenseitige Abfederung, die für die Dauerhaltbarkeit der Verbindung insbesondere bei bruchempfindlichen Bohrlochträgern von Bedeutung ist.

Fig.4 zeigt den Einschlagbolzen 17 mit einer dem Anwender zugewendeten Verdrehungseingriffsausnehmung 51 in Gestalt einer Innensechskantausnehmung. Infolgedessen kann der Einschlagbolzen 17 aus der in Fig.4 dargestellten Einbaulage auch wieder entfernt werden, indem er mit einem Sechskantschlüssel gedreht wird. Der beim Einbau zwischen dem Außengewinde 50 und der Wand 16' des Bohrlochs 16 hergestellte Formschluß bewirkt infolge der Steigung des Gewindes ein Herausdrehen des Bolzens 17. Infolgedessen sind der Einschlagbolzen 17 und auch der Dübel 12 ohne weiteres wiederverwendbar, was bei Fehlmontage von Bedeutung ist.

Fig.5 zeigt einen Einbau eines Anschlagbolzens 17 mit einer Verdrehungseingriffsausnehmung 51 in von der Fig.4 abweichender Anordnung. Die Verdrehungseingriffsausnehmung 51 ist der Sohle 41 des Bohrlochs 16 zugewendet und infolgedessen nach dem Einschlagen des Bolzens 17 nicht zugänglich. Ein zerstörungsfreies Lösen der Befestigungseinrichtung wird dadurch verhindert.

Trotz des Einschlagens des Einschlagbolzens 17 ist eine Anwendung der Befestigungseinrichtung 10 bereits bei dünnen Platten möglich, ab etwa 6mm. Dazu ist ein Montagegerät nicht erforderlich. Es genügt ein einfaches Einschlagen mit einem einfachen Werkzeug z.B. mit einem Hammer. Vorkenntnisse sind beim Einbau des Einschlagbolzens bzw. der Befestigungseinrichtung nicht erforderlich. Auch bei schneller Arbeitsweise wird stets eine flächenmäßige Anlage des Dübels 12 im Bohrloch des Bohrlochträgers 22 erreicht. Punktbelastungen entstehen nicht.

## Patentansprüche

1. Befestigungseinrichtung (10) in einem nicht durchgehenden hinterschnittenen Bohrloch (11), insbesondere für dünne Platten, mit einem bohrungssohlenseitig längsgeschlitzten Dübel (12), der an seinem inneren Ende (13) mit der Form der Hinterschneidung (14) des Bohrlochs (11) entsprechenden Spreizlappen (15) versehen ist und eine koaxiale Bohrung (16) hat, und mit einem in die Bohrung (16) eingebrachten Einschlagbolzen (17), der die Spreizlappen (15) praktisch über deren gesamte Länge abstützt, und dessen eines Ende (19) mit dem äußeren Dübelende (20) axial etwa gleichliegend angeordnet ist, **dadurch gekennzeichnet**, daß der Einschlagbolzen (17) mit einem Außengewinde (50) versehen ist und an einem seiner Enden (19,42) eine Verdrehungseingriffsausnehmung (51) aufweist.

2. Befestigungseinrichtung nach Anspruch 1, **dadurch gekennzeichnet**, daß der Einschlagbolzen (17) eine einzige, von einem Bohrlochträger abgewendete Verdrehungseingriffsausnehmung (51) hat.

3. Befestigungseinrichtung nach Anspruch 1, **dadurch gekennzeichnet**, daß die Verdrehungseingriffsausnehmung (51) bohrungssohlenseitig angeordnet ist.

4. Befestigungseinrichtung nach Anspruch 1, **dadurch gekennzeichnet**, daß der Einschlagbolzen (17) an seinen beiden Enden (19,42) mit je einer Verdrehungseingriffsausnehmung (51) versehen ist.

5. Befestigungseinrichtung nach nach einem oder mehreren der Ansprüche 1 bis 4, **dadurch gekennzeichnet**, daß der Außendurchmesser (52) des Einschlagbolzens (17) gleich oder kleiner ist, als der Durchmesser (53) der Bohrung (16) des Dübels (12).

6. Befestigungseinrichtung nach einem oder mehreren der Ansprüche 1 bis 5, **dadurch gekennzeichnet**, daß der Einschlagbolzen (17) einen vom Werkstoff des Dübels (12) abweichenden weicheren oder härteren Werkstoff aufweist.

7. Befestigungseinrichtung nach einem oder mehreren der Ansprüche 1 bis 6, **dadurch gekennzeichnet**, daß die Verdrehungseingriffsausnehmung (15) ein Innenmehrkant ist.

8. Befestigungseinrichtung nach einem oder mehreren der Ansprüche 1 bis 7, **dadurch gekennzeichnet**, daß der Einschlagbolzen (17) eine geschlitzte Gewindehülse ist.

9. Befestigungseinrichtung nach einem oder mehreren der Ansprüche 1 bis 8, **dadurch gekennzeichnet**, daß der Dübel (12) an seinem äußeren Dübelende (20) einen radial vorspringenden Ringkragen (21) hat, der zur axialen Lageanpassung des Dübels (12) an seiner wandseitigen Ringfläche (54) radial innen dünner ist, als radial außen.

## Claims

1. A fastener device (10) in an undercut blind borehole (11), particularly for thin plates, comprising a plug (12) provided with a longitudinal slit at the end facing the bottom of the hole, said plug being provided at its inner end (13) with spreadable tongues (15) matched to the shape of the undercut (14) of the borehole (11) and having a coaxial bore (16), and comprising a drive-in bolt (17) arranged in the bore (16), which bolt supports the spreadable tongues (15) over practically their full length and whose one end (19) is arranged substantially flush with the outer end (20) of the plug in the axial direction, **characterised in that** the drive-in bolt (17) is provided with an external thread (50) and has a grip-and-turn recess (51) at one of its ends (19, 42).

2. A fastener device according to claim 1, **characterised in that** the drive-in bolt (17) has a single grip-and-turn recess (51) remote from a borehole carrier.

3. A fastener device according to claim 1, **characterised in that** the grip-and-turn recess (51) is arranged at the end facing the bottom of the borehole.

4. A fastener device according to claim 1, **characterised in that** the drive-in bolt (17) is provided with a grip-and-turn recess (51) at each of its two ends (19, 42).

5. A fastener device according to one or more of claims 1 to 4, **characterised in that** the external diameter (52) of the drive-in bolt (17) is the same as or smaller than the diameter (53) of the bore (16) of the plug (12).

6. A fastener device according to one or more of claims 1 to 5, **characterised in that** the drive-in bolt (17) is of a softer or harder material than the material of the plug (12).

7. A fastener device according to one or more of claims 1 to 6, **characterised in that** the grip-and-turn recess (51) is an internal polyhedron.

8. A fastener device according to one or more of claims 1 to 7, **characterised in that** the drive-in bolt (17) is a slotted threaded sleeve.

9. A fastener device according to one or more of claims 1 to 8, **characterised in that** the plug (12) has a radially projecting annular collar (21) at its outer plug end (20), which, for the axial positional fixing of the plug (12), is thinner at its annular surface (54) which faces the wall at its radially inner zone than at its radially outer zone.

## Revendications

1. Dispositif de fixation (10) dans un trou borgne contre-dépouillé (11), en particulier pour des plaques minces, comportant une cheville (12) qui est fendue longitudinalement, du côté du fond du perçage, qui est pourvue, à son extrémité intérieure (13), de pattes d'écartement (15) qui correspondent à la forme de la contre-dépouille (14) du trou (11) et qui présente un perçage coaxial (16), et un axe à enfoncer (17) qui est introduit dans le perçage (16), qui supporte les pattes d'écartement (15) pratiquement sur toute leur longueur et dont une extrémité (19) est disposée approximativement suivant le même axe que le diamètre extérieur de l'extrémité de cheville extérieure (20), **caractérisé** en ce que l'axe à enfoncer (17) est pourvu d'un filetage extérieur (50) et présente sur l'une de ses extrémités (19, 42) un creux de contact par torsion (51).

2. Dispositif de fixation selon la revendication 1, **caractérisé** en ce que l'axe à enfoncer (17) a un seul creux de contact par torsion (51) opposé à un support de trou.

3. Dispositif de fixation selon la revendication 1, **caractérisé** en ce que le creux de contact par torsion (51) est disposé du côté du fond du perçage.

4. Dispositif de fixation selon la revendication 1, **caractérisé** en ce que l'axe à enfoncer (17) est pourvu à ses deux extrémités (19, 42) d'un creux de contact par torsion (51).

5. Dispositif de fixation selon l'une au moins des revendications 1 à 4, **caractérisé** en ce que le diamètre extérieur (52) de l'axe à enfoncer (17) est égal ou inférieur au diamètre (53) du perçage (16) de la cheville (12).

6. Dispositif de fixation selon l'une au moins des revendications 1 à 5, **caractérisé** en ce que l'axe à enfoncer (17) se compose d'un matériau différent et plus mou ou plus dur par rapport à celui de la cheville (12).

7. Dispositif de fixation selon l'une au moins des revendications 1 à 6, **caractérisé** en ce que le creux de contact par torsion (51) est une empreinte polygonale.

8. Dispositif de fixation selon l'une au moins des revendications 1 à 7, **caractérisé** en ce que l'axe à enfoncer (17) est une douille filetée fendue.

9. Dispositif de fixation selon l'une au moins des revendications 1 à 8, **caractérisé** en ce que la cheville (12) présente à son extrémité extérieure (20) une collerette annulaire (21) saillant radialement qui, en vue d'un ajustement de position axial de la cheville (12) au niveau de sa surface annulaire (54) située côté paroi, est plus mince radialement vers l'intérieur que radialement vers l'extérieur.
